# EUROPÄISCHE PATENTSCHRIFT

(11) **EP 0 659 710 B1**
(45) Veröffentlichungstag und Bekanntmachung des Hinweises auf die Patenterteilung: **24.03.1999**
(21) Anmeldenummer: 94120134.5
(22) Anmeldetag: 19.12.1994
(51) Int. Cl.: C04B 41/87, C04B 41/89

(54) **Verfahren zum Schutz von Faserwerkstoffen**
Method for protecting fibre composites
Procédé pour protéger les composites fibreux

(30) Priorität: 22.12.1993 DE 4343845; 26.03.1994 DE 4410654
(43) Veröffentlichungstag der Anmeldung: 28.06.1995
(73) Patentinhaber: ABB PATENT GmbH, 68309 Mannheim (DE)
(72) Erfinder: Schuh, Lothar, Dr., D-68723 Plankstadt (DE); Kranzmann, Axel, Dr., D-70182 Stuttgart (DE)
(74) Vertreter: Rupprecht, Klaus, Dipl.-Ing.

(56) Entgegenhaltungen:
- EP-A- 0 442 410
- EP-A- 0 470 340
- WO-A-92/19567
- DE-A- 2 703 814
- US-A- 3 859 153
- CHEMICAL ABSTRACTS, vol. 106, no. 24, 5. Juni 1987, Columbus, Ohio, US; abstract no. 200733k, Seite 283 ; & JP-A-6 247 687 (K. TAKEMOTO) 2. März 1987

## Beschreibung

Die Erfindung bezieht sich auf ein Verfahren zum Schutz von keramischen Faserwerkstoffen gemäß dem Oberbegriff des Patentanspruches 1.

Keramische Faserwerkstoffe besitzen eine hohe Temperaturwechselbeständigkeit, eine geringe Wärmekapazität und gute Wärmedämmfähigkeiten. Sie werden beispielsweise in Gasturbinen zur thermischen Isolation von Heißgaskanälen eingesetzt. Die Faserwerkstoffe sind dabei den zerstörenden Angriffen von Gaskomponenten und Partikeln ausgesetzt, die im Gas mitgeführt werden. Die Zerstörung des Faserwerkstoffes verläuft umso schneller, je höher die Partikelladung des Gasstromes ist. Um die Oberfläche der Faserwerkstoffe gegen die zerstörenden Einwirkungen zu schützen, werden diese beispielsweise mit einem Solhärter getränkt. Dadurch werden die Faserwerkstoffe etwas beständiger gegen mechanische Abriebe durch die Bestandteile im Gasstrom.

Aus WO-A-92/19567 ist ein Überzug bekannt, der aus zwei Schichten besteht, wovon die unterste Schicht eine poröse Struktur aufweist. Für deren Ausbildung wird zunächst auf die Oberfläche des zu schützenden Bauelements ein Schlicker aufgetragen. Dieser wird aus einem Bindemittel gebildet, das kleine Teilchen enthält, die aus nichtkeramischen Materialen hergestellt sind. Nach dem Trocken des Schlickers wird dieser mit einer Schicht überzogen, die keramische Teilchen enthält.

In EP-A-0 442 410 ist ein Verfahren zur Herstellung von Trägermaterial aus Titanoxid beschrieben. Diese Träger können mit einer vorgebbaren Porosität gefertigt werden und kommen deshalb bei Trenn- und Filterverfahren zur Anwendung. Die Verwendung dieser Träger aus Titanoxid als Schutzschicht für Bauelemente aus keramischen Fasern ist in dieser Entgegenhaltung nicht beschrieben.

Der Erfindung liegt die Aufgabe zugrunde, ein Verfahren aufzuzeigen, mit dem Oberflächen von Faserwerkstoffen aus keramischen Fasern zuverlässig gegen die Zerstörung durch in einem Gasstrom mitgeführte Partikel geschützt werden können.

Diese Aufgabe wird erfindungsgemäß durch die Merkmale des Patentanspruches 1 gelöst. Vorteilhafte Ausführungsformen des erfindungsgemäßen Verfahrens sind in den Ansprüchen 2 bis 4 beansprucht.

Erfindungsgemäß wird auf die Oberfläche des Faserwerkstoffes ein Überzug aus keramischem Material aufgetragen und dauerhaft mit der Oberfläche verbunden. Vorzugsweise weist der keramische Überzug eine Dicke von 0,1 bis 2 mm auf. Zur Ausbildung des Überzugs wird eine Suspension aus Aluminosilikat, Aluminiumoxid, Zirkoniumoxid oder Siliziumcarbid gebildet. Als Suspensionsmittel wird Wasser oder Alkohol verwendet. Zur Ausbildung des Überzuges wird die Suspension durch Sprühen, Tauchen oder mit Hilfe eines anderen bekannten Verfahrens auf die Oberfläche des Faserwerkstoffes aufgetragen. Anschließend wird der Überzug zusammen mit dem Faserwerkstoff einer Wärmebehandlung bei etwa 1550°C unterzogen. Hierbei wird das Suspensionsmittel verdampft und die Oberfläche sintert. Zurückbleibt ein keramischer Überzug, der dauerhaft mit der Oberfläche des Faserwerkstoffes verbunden ist. Durch eine entsprechende Wahl der Brenndauer kann erreicht werden, daß der Überzug eine definierte Porosität aufweist. Diese kann etwa 5% betragen. Soll der ausgebildete Überzug eine Schichtstruktur aufweisen, dessen Dichte von außen nach innen zum Faserwerkstoff hin graduell abnimmt, so wird eine weitere Suspension mit der gleichen oder einer anderen chemischen Zusammensetzung aufgetragen. Dabei reicht es aus, wenn beispielsweise lediglich die Korngröße des verwendeten keramischen Materials kleiner gewählt wird. In diesem Fall ist eine weitere Wärmebehandlung bei ca. 1500°C erforderlich. Um dem Überzug eine optimale Festigkeit zu geben, und eine dauerhafte Verbindung zwischen ihm und dem Faserwerkstoff herzustellen, kann eine organische oder anorganische aluminiumhaltige Lösung vor der Wärmebehandlung auf die Oberfläche des Überzugs aufgetragen werden. Vorzugsweise wird hierfür eine Aluminiumnitratlösung verwendet. Diese Lösung hat die Eigenschaft, daß sie in die Oberfläche eindiffundiert. Bei der anschließenden Wärmebehandlung wird das Lösungsmittel verdampft. Es bildet sich Aluminiumoxid, das zum einen die Festigkeit des Überzugs vergrößert und gleichzeitig seine Verbindung mit dem Faserwerkstoff des Bauteiles verstärkt. Der Überzug kann auf seiner Oberfläche glatt sein oder mit Rillen versehen werden. Die Geometrie der Rillen wird so gewählt, daß eventuell auftretende Risse im Überzug, in denen sich thermomechanische Spannungen abbauen, in den Vertiefungen der Rillen entstehen. Dadurch werden diese Schwachstellen vor den zerstörenden Einwirkungen der im Gas mitgeführten Partikel geschützt.

Weitere erfindungswesentliche Merkmale sind in den Unteransprüchen gekennzeichnet.

Die Erfindung wird nachfolgend anhand von schematischen Zeichnungen näher erläutert.
Es zeigen:
- Fig. 1: ein Bauteil aus einem Faserwerkstoff, der mit einem Überzug versehen ist,
- Fig. 2: ein Bauteil nach Fig. 1, dessen Überzug mit einer zusätzlichen Verstärkung versehen ist,
- Fig. 3: ein Bauteil nach Fig. 1, dessen Überzug mit Rillen versehen ist.

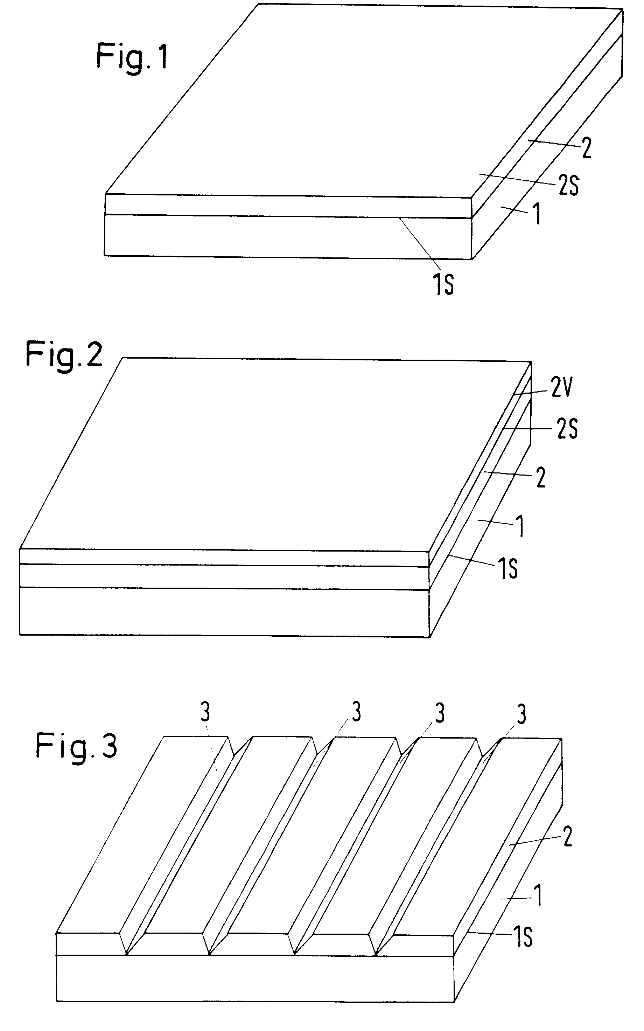

Figur 1 zeigt ein Bauelement 1, das aus einem Faserwerkstoff gefertigt ist. Dieser wird aus Keramikfasern gefertigt, die mit einem Bindemittel vergossen werden. Dieses Herstellungsverfahren gehört zum Stand der Technik. Um die Oberfläche 1S des Bauelementes 1 vor zerstörenden Einwirkungen zu schützen, ist auf diese ein Überzug 2 aufgetragen. Dieser wird durch einen keramischen Werkstoff gebildet. Hierfür wird pulverförmiges Aluminosilikat, Aluminiumoxid, Zirkoniumoxid oder Siliziumcarbid mit einer Korngröße von etwa 5µm in ein Suspensionsmittel eingerührt. Als Suspensionsmittel eignen sich Wasser oder Alkohol. Die Menge des pulverförmigen keramischen Werkstoffes beträgt 40 Gew% bezogen auf die Gesamtmenge der verwendeten Suspension. Ferner werden der Suspension Dispergiermittel in Form von Polyacrylsäure oder HNO₃ zugesetzt. Die Suspension kann zur Ausbildung des Überzuges 2 auf die Oberfläche 1S des Bauteils 1 aufgesprüht werden. Andere Auftragungsverfahren sind ebenfalls möglich. Die Dicke des auszubildenden Überzuges 2 beträgt vorzugsweise 0,1 bis 2 mm. Die Suspension wird deshalb so dick aufgetragen, daß der Überzug 2 später diese Dicke aufweist. Die Suspension kann jedoch auch mehrfach aufgetragen werden, bis die gewünschte Dicke erreicht ist. Nach jedem Auftragen wird die Suspension zunächst getrocknet. Die aufgetragene Suspension wird nach dem Trocknen einer Wärmebehandlung unterzogen. Vorzugsweise wird der Überzug 2 ein bis zehn Stunden einer Temperatur von maximal 1550°C ausgesetzt. Falls das Bauteil 1 extremen Bedingungen, insbesondere Gasströmen ausgesetzt wird, die sehr stark mit Schlacken und anderen Komponenten belastet sind, wird der Überzug 2, wie Figur 2 zeigt, mit einer Verstärkung 2V versehen. Diese Verstärkung 2V wird dadurch gebildet, daß auf den Überzug 2 nach der Wärmebehandlung eine weitere Suspension aufgetragen wird. Diese hat vorzugsweise die gleiche Zusammensetzung, wie sie bereits zur Ausbildung des Überzuges 2 verwendet wurde. Lediglich weist das hierfür verwendete keramische Pulver eine kleinere Korngröße auf. Diese beträgt vorzugsweise 0,1 bis 2 µm. Die zur Ausbildung der Verstärkung 2V aufgetragene Suspension wird ebenfalls getrocknet. Falls die gewünschte Dicke noch nicht erreicht ist, kann bei Bedarf noch mehrmals von der Suspension aufgetragen werden, nachdem der jeweils vorangegangene Auftrag getrocknet ist. Anschließend wird das Bauteil 1 einer weiteren Wärmebehandlung bei etwa 1500°C für eine Dauer von 1 bis 10 Stunden unterzogen.

Um dem Überzug 2 eine optimale Festigkeit und eine dauerhafte Verbindung mit dem Faserwerkstoff zu ermöglichen, wird vor der Wärmebehandlung des Überzuges 2 auf die Oberfläche 2S desselben eine organische oder anorganische aluminiumhaltige Lösung aufgetragen. Vorzugsweise wird hierfür eine Aluminiumnitratlösung verwendet. Diese Lösung hat die Eigenschaft, daß sie in die Oberfläche 2S über vorhandene Poren eindiffundiert. Bei der anschließenden Wärmebehandlung wird das Lösungsmittel verdampft. Es bildet sich Aluminiumoxid, das zum einen die Festigkeit des Überzugs 2 vergrößert und gleichzeitig seine Verbindung mit dem Faserwerkstoff des Bauteiles 1 verstärkt.

Wie Figur 3 zeigt, können in die Oberfläche des Überzuges 2 Rillen 3 einzuprägen werden. Diese weisen eine Tiefe von 0,1 bis 1 mm auf und sind 0,1 bis 1 mm breit. Diese Rillen 3 werden vor der Wärmebehandlung des Überzuges 2 ausgebildet. Die Segmentierung der Rillen 3 wird so gewählt, daß eventuell auftretende Risse im Überzug 2, die auf Grund von thermischen Spannungen entstehen, sich in den Vertiefungen dieser Rillen 3 ausbilden. Dadurch werden diese Schwachstellen im Überzug 2 vor zerstörenden Einwirkungen der im Gas mitgeführten Partikel geschützt.

## Patentansprüche

1. Verfahren zum Schutz von Faserwerkstoff aus keramischen Fasern mit einem Überzug (2) aus einem keramischen Material, dadurch gekennzeichnet, daß auf der Oberfläche (1S) von Bauteilen (1) aus keramischen Faserwerkstoffen wenigstens ein Überzug (2) aus einer Suspension aufgetragen wird, die aus Wasser oder Alkohol und einem keramischem Pulver in Form von Alumosilikat, Aluminiumoxid, Zirkoniumoxid oder Siliziumcarbid gebildet wird, das eine Korngröße von 5 µm aufweist und dessen Anteil 40 Gew.% bezogen auf die Gesamtmenge der verwendeten Suspension beträgt, der zusätzlich ein Dispergiermittel in Form von Polyacrylsäure oder HNO₃ beigemischt wird, daß die aufgetragene Suspension getrocknet und das Auftragen der Suspension und das Trocknen solange wiederholt wird, bis der aufgetragene Überzug (2) die nach der Fertigstellung gewünschte Dicke aufweist, und daß sich an den letzten Trocknungsschritt eine Wärmebehandlung bei einer Temperatur von maximal 1550° C während 1 bis 10 Stunden anschließt.

2. Verfahren nach Anspruch 1, dadurch gekennzeichnet, daß vor der Wärmebehandlung des Überzuges (2) auf die Oberfläche (2S) desselben eine Aluminiumnitratlösung aufgetragen wird.

3. Verfahren nach einem der Ansprüche 1 bis 2 , dadurch gekennzeichnet, daß in die Oberfläche (2S) des Überzuges (2) vor der Wärmebehandlung Rillen (3) mit einer Tiefe von 0,1 bis 1 mm und einer Breite von 0,1 bis 1 mm eingefräst werden.

4. Verfahren nach einem der Ansprüche 1 bis 3, dadurch gekennzeichnet, daß zur Ausbildung einer Verstärkung (2V) auf der Oberfläche (2S) des Überzuges (2) eine Suspension mit gleicher Zusammensetzung wie für die Ausbildung des Überzuges (2) aufgetragen wird, daß die Korngröße des verwendeten keramischen Pulvers kleiner als 2 µm gewählt wird, und daß zur Ausbildung der Verstärkung (2V) die Suspension sooft aufgetragen und getrocknet wird, bis die Verstärkung (2V) die nach der Fertigstellung gewünschte Dicke aufweist, und daß sich an den letzten Trocknungsschritt eine Wärmebehandlung bei maximal 1550°C während 1 bis 10 Stunden anschließt.

## Claims

1. Process for protecting fibre composite material made of ceramic fibres by means of a coating (2) of a ceramic material, characterized in that at least one coating (2) is applied to the surface (1S) of components (1) made of ceramic-fibre composite materials from a suspension formed from water or alcohol and a ceramic powder in the form of aluminosilicate, aluminium oxide, zirconium oxide or silicon carbide which has a particle size of 5 µm and whose proportion is 40% by weight based on the total amount of suspension used and into which a dispersant in the form of polyacrylic acid or HNO₃ is additionally mixed, in that the suspension applied is dried and the application of the suspension and the drying is repeated until the applied coating (2) has the thickness desired after completion of the production process, and in that the last drying step is followed by heat treatment at a temperature of at most 1550°C for from 1 to 10 hours.

2. Process according to Claim 1, characterized in that, before the heat treatment of the coating (2), an aluminium nitrate solution is applied to the surface (2S) thereof.

3. Process according to either one of Claims 1 and 2, characterized in that grooves (3) having a depth of from 0.1 to 1 mm and a width of from 0.1 to 1 mm are milled into the surface (2S) of the coating (2) prior to heat treatment.

4. Process according to any one of Claims 1 to 3, characterized in that to form a reinforcement (2R) on the surface (2S) of the coating (2), a suspension having the same composition as that for the formation of the coating (2) is applied, in that the particle size of the ceramic powder used is selected so as to be less than 2 µm, and in that to form the reinforcement (2R) the suspension is repeatedly applied and dried until the reinforcement (2R) has the thickness desired after completion of the production process, and in that the last drying step is followed by heat treatment at a maximum of 1550°C for from 1 to 10 hours.

## Revendications

1. Procédé de protection de produit fibreux en fibres céramiques par un revêtement (2) en matière céramique, caractérisé en ce que l'on applique sur la surface (1S) d' éléments de construction (1) en produit fibreux céramique au moins une couche (2) d'une suspension constituée d'eau ou d'alcool et d'une poudre céramique sous la forme d'aluminosilicate, d'oxyde d'aluminium, d'oxyde de zirconium ou de carbure de silicium, qui présente une taille de grain de 5 µm et qui représente 40 % en poids de la quantité totale de la suspension utilisée, suspension à laquelle est ajoutée en plus un dispersant sous la forme de poly(acide acrylique) ou de HNO₃, en ce que l'on sèche la suspension appliquée et répète l'application de la suspension et le séchage jusqu'à ce que le revêtement appliqué (2) présente l'épaisseur voulue après achèvement, et en ce que la dernière étape de séchage est suivie d'un traitement thermique à une température maximale de 1550 °C pendant 1 à 10 heures.

2. Procédé selon la revendication 1, caractérisé en ce que, avant le traitement thermique du revêtement (2), on applique sur sa surface (2S) une solution de nitrate d'aluminium.

3. Procédé selon la revendication 1 ou 2, caractérisé en ce que, avant le traitement thermique, on forme par fraisage des gorges (3) de profondeur 0,1 à 1 mm et de largeur 0,1 à 1 mm dans la surface (2S) du revêtement (2).

4. Procédé selon l'une quelconque des revendications 1 à 3, caractérisé en ce que, pour former un renfort (2V) sur la surface (2S) du revêtement (2), on applique une suspension ayant la même composition que pour la formation du revêtement (2), en ce que la taille de grain de la poudre céramique utilisée est choisie inférieure à 2 µm, en ce que, pour la formation du renfort (2V), on applique et on sèche la suspension autant de fois qu'il est nécessaire pour que le renfort (2V) présente l'épaisseur souhaitée après achèvement, et en ce que la dernière étape de séchage est suivie d'un traitement thermique à une température maximale de 1550 °C pendant 1 à 10 heures.
